# FASCICULE DE BREVET EUROPEEN

(11) **EP 1 051 791 B1**
(45) Date de publication et mention de la délivrance du brevet: **28.05.2008**
(21) Numéro de dépôt: 99973188.8
(22) Date de dépôt: 30.11.1999
(51) Int. Cl.: H02K 1/22

(54) **Procédé de fabrication d'un alternateur à aimants interpolaires et alternateur obtenu selon le procédé**
Herstellungsverfahren für einen Wechselstromgenerator für Kraftfahrzeuge mit Zwischenpolmagneten sowie nach diesem Verfahren hergestellter Generator
Manufacturing method for a motor vehicle alternator and alternator obtained with the same method

(30) Priorité: 30.11.1998 FR 9815034
(43) Date de publication de la demande: 15.11.2000
(73) Titulaire: VALEO EQUIPEMENTS ELECTRIQUES MOTEUR, 94000 Créteil (FR)
(72) Inventeur: ARMIROLI, Paul, F-94440 Marolles-en-Brie (FR); BADEY, Jean-Philippe, F-62630 Etaples-sur-mer (FR)
(74) Mandataire: de Lambilly Delorme, Marie Pierre
(86) Numéro de dépôt international: PCT/FR1999/002960
(87) Numéro de publication internationale: WO 2000/033440

(56) Documents cités:
- EP-A- 0 834 979
- EP-A- 0 866 542
- US-A- 3 445 694
- US-A- 5 306 977
- PATENT ABSTRACTS OF JAPAN vol. 096, no. 003, 29 mars 1996 (1996-03-29) -& JP 07 312854 A (HITACHI LTD), 28 novembre 1995 (1995-11-28)
- PATENT ABSTRACTS OF JAPAN vol. 097, no. 003, 31 mars 1997 (1997-03-31) -& JP 08 317618 A (HITACHI LTD), 29 novembre 1996 (1996-11-29)
- PATENT ABSTRACTS OF JAPAN vol. 011, no. 122 (E-500), 16 avril 1987 (1987-04-16) -& JP 61 269650 A (KENKICHI KUMAKURA;OTHERS: 01), 29 novembre 1986 (1986-11-29)
- PATENT ABSTRACTS OF JAPAN vol. 097, no. 008, 29 août 1997 (1997-08-29) -& JP 09 098556 A (HITACHI LTD), 8 avril 1997 (1997-04-08)
- PATENT ABSTRACTS OF JAPAN vol. 016, no. 465 (E-1270), 28 septembre 1992 (1992-09-28) -& JP 04 165950 A (NIPPONDENSO CO LTD), 11 juin 1992 (1992-06-11)
- PATENT ABSTRACTS OF JAPAN vol. 1998, no. 11, 30 septembre 1998 (1998-09-30) -& JP 10 174394 A (DENSO CORP), 26 juin 1998 (1998-06-26)

## Description

La présente invention a trait d'une façon générale aux machines tournantes telles que les alternateurs pour véhicules automobiles du type comportant un stator et un rotor.

On connait des alternateurs à cornes ou griffes avec des aimants comme par exemple le brevet EP834979 où les aimants sont disposés entre deux cornes d'un même plateau ou JP09098556 où les aimants sont placés entre les cornes imbriquées des deux plateaux. On connaît un rotor d'alternateur comprenant deux plateaux portant des cornes ou griffes polaires mutuellement imbriquées. Des aimants sont disposés dans les interstices entre les cornes adjacentes en étant supportés par des bandes de maintien passant sous les cornes. Ce rotor a pour inconvénient que l'encombrement des bandes réduit le volume disponible à l'intérieur du rotor sous les cornes. De plus, il requiert de mettre en place les aimants avant d'associer les plateaux l'un à l'autre, ce qui peut être malaisé ou contraignant en fonction de l'organisation de la chaîne d'assemblage.

Un but de l'invention est de fournir un procédé de fabrication d'un alternateur de véhicule, l'alternateur comprenant un rotor comportant des cornes imbriqués, des aimants disposés entre les cornes, et au moins une bande de maintien des aimants, ledit procédé comprenant une phase d'assemblage d'un rotor, comprenant les étapes consistant à :
- imbriquer des cornes ; et
- rapporter sur une face externe circonférentielle des cornes, au moins une bande portant des aimants pour disposer les aimants entre les cornes.

Avantageusement, on rapporte la ou chaque bande en l'enroulant sur les cornes autour d'un axe du rotor.

Par la mise en oeuvre du procédé selon l'invention, il est obtenu un alternateur de véhicule comprenant un rotor comportant des cornes imbriquées, des aimants disposés entre les cornes, et au moins une bande de maintien des aimants, dans lequel la ou chaque bande s'étend sur une face externe circonférentielle des cornes.

Ainsi, les tronçons de la ou chaque bande contigus aux cornes (généralement plus longs que ceux contigus aux aimants) ne viennent pas entamer le volume intérieur du rotor. De plus, cette disposition permet la plupart du temps de disposer la ou les bandes et les aimants après avoir effectué l'imbrication des cornes par l'assemblage mutuel des plateaux.

Avantageusement, la ou chaque bande s'étend sur une face externe circonférentielle des aimants.

Ainsi, on augmente encore le volume disponible dans le rotor. De plus, on peut toujours rapporter les aimants une fois les cornes imbriquées, par exemple par enroulement de la ou des bandes autour d'un axe du rotor.

Avantageusement, la ou chaque bande forme un tour complet autour d'un axe du rotor.

Avantageusement, les cornes présentent une gorge de réception de la ou chaque bande.

Ainsi, on évite d'augmenter l'encombrement du rotor dans l'entrefer.

Avantageusement, la gorge a une dimension radiale par rapport à un axe du rotor supérieure à une dimension correspondante de la bande associée.

Ainsi, la bande n'empiète pas sur le diamètre hors tout du rotor.

Avantageusement, la gorge est contiguë à un chanfrein ou à une face d'extrémité axiale des cornes par référence à un axe du rotor.

Avantageusement, la ou chaque bande présente des tronçons porteurs contigus aux aimants et des tronçons intermédiaires s'étendant entre les aimants et ayant une largeur parallèlement à un axe du rotor inférieure à une largeur correspondante des tronçons porteurs.

Ainsi, on effectue une économie de matière au niveau des tronçons intermédiaires sans nuire à la qualité du maintien des aimants sur les tronçons porteurs.

Avantageusement, les aimants sont collés sur la ou les bandes.

D'autres caractéristiques et avantages de l'invention apparaîtront encore dans la description suivante d'un mode préféré de réalisation donné à titre d'exemple non limitatif. Aux dessins annexés :
- la figure 1 est une vue partiellement de côté et partiellement en coupe axiale d'un rotor d'un alternateur selon l'invention sans les bandes ;
- la figure 2 est une vue en élévation des bandes destinées au rotor de la figure 1 ;
- la figure 3 est une vue analogue à la figure 4 montrant les aimants sur les bandes ;
- la figure 4 est une vue des bandes et des aimants en coupe selon le plan IV-IV de la figure 3 ;
- la figure 5 illustre en vue d'extrémité axiale l'étape d'enroulement des bandes sur le rotor ;
- la figure 6 est une vue partielle en coupe axiale d'un détail du rotor de la figure 1 portant les bandes ;
- la figure 7 est une vue schématique montrant l'orientation générale des faces des aimants ; et
- les figures 8 et 9 illustrent deux modes de réalisation des aimants.

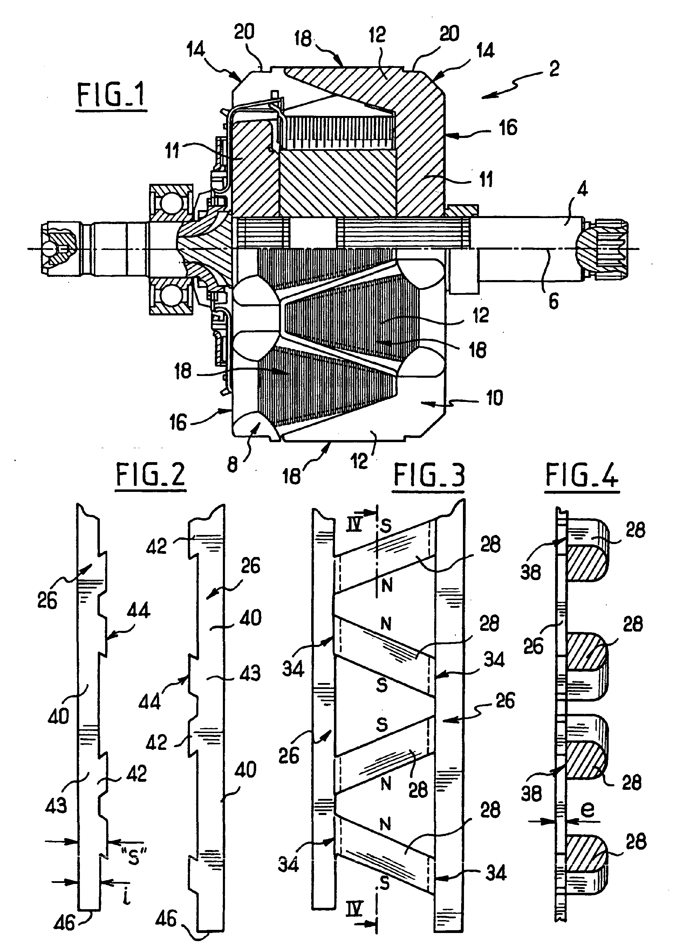

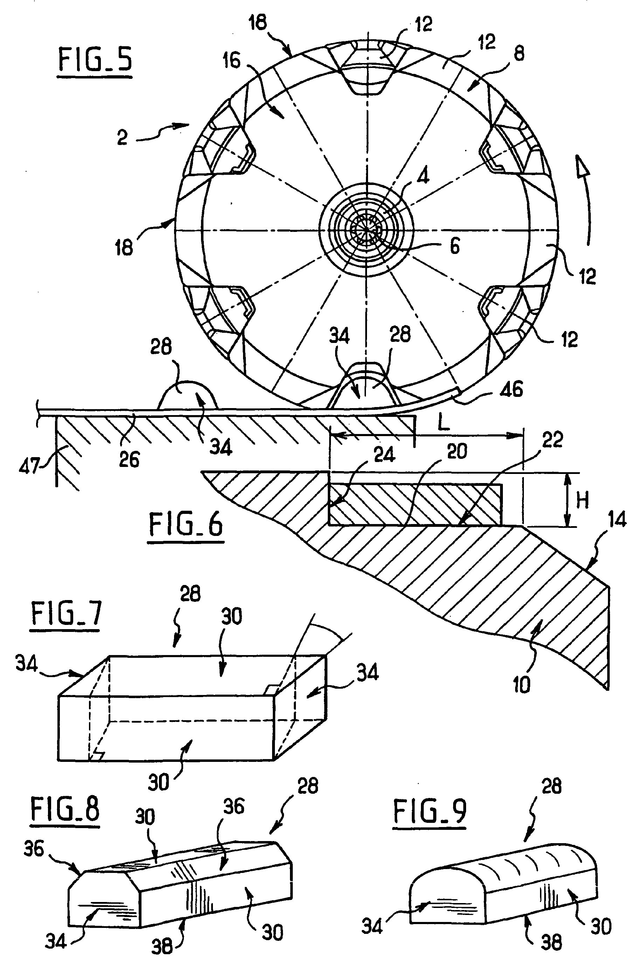

En référence aux figures 1 et 5, le rotor 2 pour alternateur de véhicule automobile comporte, dans le présent mode de réalisation de l'invention, un arbre 4 d'axe 6 et deux plateaux polaires 8, 10 présentant chacun une paroi centrale plane 11 en forme de disque d'axe 6. Le plateau 8, à gauche sur la figure 1, est destiné à être du côté d'un collecteur de l'alternateur, au contraire de l'autre plateau 10 à droite.

De façon connue en soi, chaque plateau 8, 10 comporte des cornes polaires 12 chacune de forme générale plane triangulaire s'étendant parallèlement à l'axe 6. Sur chaque plateau, les cornes 12 s'étendent à partir de la paroi centrale 11 avec la pointe de chaque corne en direction de l'autre plateau, toutes dans le même sens. Les cornes d'un même plateau sont espacées les unes des autres pour définir entre elles des intervalles de réception des cornes respectives de l'autre plateau, de sorte que les cornes des plateaux sont mutuellement imbriquées. Chaque plateau 8, 10 présente un chanfrein 14, ici à 45° par rapport à l'axe 6, à la jonction entre une face d'extrémité axiale 16 des cornes 12 perpendiculaire à l'axe 6 et une face externe circonférentielle 18 des cornes parallèle à l'axe 6.

Sur la face externe circonférentielle 18 des cornes est ménagée une gorge 20 à profil en "L" contiguë au chanfrein 14 ayant un flanc horizontal 22 parallèle à la face externe 18 et à l'axe 6, et un flanc droit 24 perpendiculaire à ceux-ci. Le flanc droit 24 a une hauteur H, qui correspond à la profondeur de la gorge suivant une direction radiale à l'axe. Le flanc horizontal 22 a une largeur L, qui correspond à la largeur de la gorge parallèlement à l'axe.

En référence aux figures 2 à 4, le rotor comporte au moins une bande plate allongée 26, ici au nombre de deux, et en référence aux figures 3, 4, 7, 8 et 9, des aimants permanents 28. Les aimants sont identiques entre eux. Ils ont une forme générale en parallélépipède allongé suivant l'une de ses dimensions. Les quatre faces allongées 30 de ce parallélépipède parallèles à cette dimension forment une section rectangulaire, mais les faces d'extrémité 34 du parallélépipède, parallèles entre elles, sont inclinées par rapport à cette dimension. Il s'agit ainsi d'un parallélépipède rectangle à ceci près que ses faces d'extrémité sont obliques par rapport à son axe longitudinal. En référence aux figures 7, 8 et 9, chaque aimant 28 pourra présenter deux chanfreins longitudinaux 36 formant un sommet de largeur réduite, opposé à une base 38 de l'aimant, ou avoir une section transversale arrondie au niveau de ce sommet.

Les deux bandes 26 s'étendant parallèlement l'une à l'autre avec leurs faces principales coplanaires. Les aimants 28 sont disposés avec leur base 38 sur les bandes de sorte que les faces d'extrémité 34 des aimants sont parallèles à la direction longitudinale des bandes 26. Par conséquent, l'axe longitudinal de chaque aimant 28 est incliné par rapport à la direction longitudinale des bandes. De plus, les aimants 28 sont choisis de sorte que l'inclinaison des faces d'extrémité 34, d'angle constant en valeur absolue, est tantôt associée à un côté, tantôt à l'autre. On dispose ainsi de deux groupes d'aimants 28, que nous appellerons ici aimants gauche et droit, agencés en alternance le long des bandes 26 de sorte qu'on alterne les inclinaisons des axes des aimants. Les aimants 28 forment ainsi une configuration en zigzag. Les aimants permanents 28 sont polarisés de sorte que les polarités identiques, Nord ou Sud, associées aux faces longitudinales latérales des aimants, se font face sur deux aimants consécutifs.

Les aimants sont disposés sur une même face des bandes avec leur base 38 contiguë aux bandes 26, les sommets s'étendant à distance des bandes. Les bandes 26 présentent des tronçons intermédiaires 40 s'étendant au niveau des espaces entre les aimants 28 en vue en plan. Tous ces tronçons 40 ont une même largeur "i". Entre ceux-ci, les bandes présentent des ergots 42 supportant les aimants 28 et s'étendant au niveau de tronçons porteurs 43 de la bande, disposés entre les tronçons intermédiaires 40. Les ergots 42 ont un bord d'extrémité 44 parallèle à un bord des tronçons intermédiaires 40, et des bords latéraux présentant une inclinaison identique à celle des aimants 28. Les ergots 42 s'étendent en saillie d'un bord de la bande dirigé vers l'autre bande, de sorte que la largeur "s" des tronçons porteurs 43 est supérieure à celle "i" des tronçons intermédiaires 40. Les aimants 28 sont disposés avec leurs portions d'extrémités axiales en appui sur les ergots 42, formant ainsi un pont d'une bande 26 à l'autre. Il y sont fixés par collage. Les bandes 26 ont une épaisseur "e" inférieure à la hauteur H des gorges 20. La largeur "i" des tronçons intermédiaires 40 est inférieure à la largeur L des gorges 20. Les bandes 26 sont identiques entre elles et disposées en regard l'une de l'autre avec un certain décalage longitudinal, comme le montre la figure 2, avant de recevoir les aimants.

Pour fabriquer le rotor, on assemble les différentes pièces visibles sur la figure 1, et notamment l'arbre 6 et les plateaux 8, 10 en imbriquant les cornes 12.

Pour fixer au rotor bandes 26 et aimants 28 assemblés comme sur les figures 3 et 4, on fixe une extrémité libre 46 des bandes 26 au rotor, ces extrémités s'étendant dans les gorges 20 respectives, les bandes 26 étant étendues, par exemple sur un support plan 47, en étant rectilignes et coplanaires aux gorges, c'est-à-dire perpendiculaires à un plan radial à l'axe 6. Les aimants 28 s'étendent du côté des bandes 26 dirigé vers le rotor. Il suffit alors d'enrouler circonférentiellement les bandes 26 sur le rotor dans les gorges 20, par exemple en faisant rouler le rotor sur le support 47 sur les bandes. Les aimants sont disposés sur les bandes de sorte qu'ils s'insèrent alors en commençant par leur sommet, dans les espaces entre les cornes adjacentes 12. Les bandes 26 ont une longueur telle qu'on effectue un tour complet avec chaque bande autour de l'axe 6 du rotor. On achève l'enroulement en disposant les extrémités des bandes exactement bout à bout et coplanaires. On soude ces extrémités l'une à l'autre.

On pourra fixer les bandes au rotor par collage, brasage, ou soudage par points.

On obtient ainsi un rotor dans lequel les bandes 26 s'étendent sur une face externe circonférentielle 18 des cornes 12 et sur la base 38 des aimants, devenue leur face externe circonférentielle.

Les bandes sont réalisées en un matériau amagnétique par découpe dans une feuille. Les gorges 20 auront par exemple une hauteur H comprise entre 0,3 et 2 mm, et une largeur L comprise entre 2 et 5 mm.

## Revendications

1. Procédé de fabrication d'un alternateur de véhicule, ledit alternateur comprenant un rotor (2) comportant des cornes imbriquées (12), des aimants (28) disposés entre les cornes, et au moins une bande (26) de maintien des aimants, ledit procédé comprenant une phase d'assemblage d'un rotor (2), **caractérisé en ce qu'**il comprend les étapes consistant à :
- imbriquer les cornes (12) ; et
- rapporter sur une face externe circonférentielle (18) des cornes, au moins une dite bande (26) portant des aimants (28) pour disposer les aimants entre les cornes.

2. Procédé selon la revendication 1, **caractérisé en ce qu'**on rapporte la ou chaque bande (26) en l'enroulant sur les cornes (12) autour d'un axe (6) du rotor.

3. Procédé selon la revendication 1 ou 2, **caractérisé en ce que** les aimants (28) sont collés sur la ou les bandes (26).

4. Alternateur de véhicule obtenu par la mise en oeuvre du procédé selon l'une quelconque des revendications 1 a 3.

5. Alternateur selon la revendication 4, **caractérisé en ce que** la ou chaque bande (26) s'étend sur une face externe circonférentielle (38) des aimants (28).

6. Alternateur selon la revendication 4 ou 5, **caractérisé en ce que** la ou chaque bande (26) forme un tour complet autour d'un axe (6) du rotor.

7. Alternate r selon l'une quelconque des revendications 4 à 6, **caractérisé en ce que** les cornes (12) présentent une gorge (20) de réception de la ou chaque bande (26).

8. Alternateur selon la revendication 7, **caractérisé en ce que** la gorge (20) a une dimension radiale (H) par rapport à un axe (6) du rotor supérieure à une dimension correspondante (e) de la bande (26) associée.

9. Alternateur selon l'une quelconque des revendications 7 ou 8, **caractérisé en ce que** la gorge (20) est contiguë à un chanfrein (14) ou à une face d'extrémité axiale (16) des cornes (12) par référence à un axe (6) du rotor.

10. Alternateur selon l'une quelconque des revendications 4 à 9, **caractérisé en ce que** la ou chaque bande (26) présente des tronçons porteurs (43) contigus aux aimants (28) et des tronçons intermédiaires (40) s'étendant entre les aimants (28) et ayant une largeur (i) parallèlement à un axe (6) du rotor inférieure à une largeur (s) correspondante des tronçons porteurs (43).

## Claims

1. Method for production of an alternator for a vehicle, the said alternator comprising a rotor (2) which contains imbricated cusps (12), magnets (28) which are placed between the cusps, and at least one strip (26) for retention of the magnets, the said method comprising a stage of assembly of a rotor (2), **characterised in that** it comprises the steps consisting of:
- imbrication of the cusps (12); and
- adding onto an outer circumferential surface (18) of the cusps at least one said strip (26) which bears magnets (28) in order to place the magnets between the cusps.

2. Method according to claim 1, **characterised in that** the or each strip (26) is added on by being wound onto the cusps (12) around an axis (6) of the rotor.

3. Method according to claim 1 or claim 2, **characterised in that** the magnets (28) are glued onto the strip(s) (26).

4. Alternator for a vehicle, obtained by implementation of the method according to any one of claims 1 to 3.

5. Alternator according to claim 4, **characterised in that** the or each strip (26) extends on an outer circumferential surface (38) of the magnets (28).

6. Alternator according to claim 4 or claim 5, **characterised in that** the or each strip (26) forms a complete turn around an axis (6) of the rotor.

7. Alternator according to any one of claims 4 to 6, **characterised in that** the cusps (12) have a groove (20) for receipt of the or each strip (26).

8. Alternator according to claim 7, **characterised in that** the groove (20) has a radial dimension (H), relative to an axis (6) of the rotor, which is greater than a corresponding dimension (e) of the associated strip (26).

9. Alternator according to either of claims 7 or 8, **characterised in that** the groove (20) is adjacent to a chamfer (14) or to an axial end surface (16) of the cusps (12) with reference to an axis (6) of the rotor.

10. Alternator according to any one of claims 4 to 9, **characterised in that** the or each strip (26) has bearing sections (43) which are adjacent to the magnets (28), and intermediate sections (40) which extend between the magnets (28) and have a width (i), parallel to an axis (6) of the rotor, which is less than a corresponding width (s) of the bearing sections (43).

## Patentansprüche

1. Verfahren zur Herstellung eines Wechselstromgenerators für Fahrzeuge, wobei der besagte Wechselstromgenerator einen Rotor (2) mit verzahnten Polschuhen (12), zwischen den Polschuhen angeordneten Magneten (28) und wenigstens einem Band (26) zum Halten der Magnete enthält, wobei das besagte Verfahren eine Phase zum Zusammenbau eines Rotors (2) beinhaltet, **dadurch gekennzeichnet, dass** es Arbeitsschritte umfasst, die darin bestehen:
- die Polschuhe (12) zu verzahnen; und
- auf einer Umfangsaußenfläche (18) der Polschuhe wenigstens ein vorgenanntes Band (26) anzubringen, das Magnete (28) trägt, um die Magnete zwischen den Polschuhen anzuordnen.

2. Verfahren nach Anspruch 1, **dadurch gekennzeichnet, dass** das bzw. jedes Band (26) durch Aufwickeln an den Polschuhen (12) um eine Achse (6) des Rotors herum angebracht wird.

3. Verfahren nach Anspruch 1 oder 2, **dadurch gekennzeichnet, dass** die Magnete (28) auf dem Band bzw. den Bändern (26) verklebt werden.

4. Wechselstromgenerator für Fahrzeuge, der durch die Anwendung des Verfahrens nach einem der Ansprüche 1 bis 3 hergestellt wird.

5. Wechselstromgenerator nach Anspruch 4, **dadurch gekennzeichnet, dass** sich das bzw. jedes Band (26) auf einer Umfangsaußenfläche (38) der Magnete (28) erstreckt.

6. Wechselstromgenerator nach Anspruch 4 oder 5, **dadurch gekennzeichnet, dass** das bzw. jedes Band (26) eine vollständige Umwicklung um eine Achse (6) des Rotors bildet.

7. Wechselstromgenerator nach einem der Ansprüche 4 bis 6, **dadurch gekennzeichnet, dass** die Polschuhe (12) eine Auskehlung (20) für die Aufnahme des bzw. jedes Bands (26) aufweisen.

8. Wechselstromgenerator nach Anspruch 7, **dadurch gekennzeichnet, dass** die Auskehlung (20) eine radiale Abmessung (H) bezogen auf eine Achse (6) des Rotors aufweist, die größer als eine entsprechende Abmessung (e) des zugehörigen Bands (26) ist.

9. Wechselstromgenerator nach einem der Ansprüche 7 oder 8, **dadurch gekennzeichnet, dass** die Auskehlung (20) an eine Abschrägung (14) oder an eine axiale Abschlussfläche (16) der Polschuhe (12) bezogen auf eine Achse (6) des Rotors angrenzt.

10. Wechselstromgenerator nach einem der Ansprüche 4 bis 9, **dadurch gekennzeichnet, dass** das bzw. jedes Band (26) an die Magnete (28) angrenzende Trägerteilstücke (43) und Zwischenteilstücke (40) aufweist, die sich zwischen den Magneten (28) erstrecken und eine Breite (i) parallel zu einer Achse (6) des Rotors haben, die kleiner als eine entsprechende Breite (s) der Trägerteilstücke (43) ist.
